# FASCICULE DE BREVET EUROPEEN

(11) **EP 2 207 739 B1**
(45) Date de publication et mention de la délivrance du brevet: **29.08.2012**
(21) Numéro de dépôt: 08871394.6
(22) Date de dépôt: 05.11.2008
(51) Int. Cl.: B65G 7/06

(54) **DISPOSITIF DE SUPPORT ET DE TRANSPORT DE CHARGES SUR COUSSIN D'AIR**
VORRICHTUNG ZUM TRAGEN UND TRANSPORTIEREN VON LASTEN AUF EINEM LUFTPOLSTER
DEVICE FOR SUPPORTING AND TRANSPORTING LOADS ON A CUSHION OF AIR

(30) Priorité: 16.11.2007 FR 0708059
(43) Date de publication de la demande: 21.07.2010
(73) Titulaire: Bertin Technologies, 78180 Montigny-le-Bretonneux (FR)
(72) Inventeur: BOQUET, Jean, F-78610 Le Perray en Yvelines (FR)
(74) Mandataire: Ramey, Daniel
(86) Numéro de dépôt international: PCT/FR2008/001553
(87) Numéro de publication internationale: WO 2009/092909

(56) Documents cités:
- DE-A1- 3 440 933
- GB-A- 2 298 173
- US-A- 3 375 893
- US-A- 3 576 231

## Description

L'invention concerne un dispositif de support et de transport de charges sur coussin d'air, en particulier de charges lourdes, typiquement de plusieurs tonnes, selon le préamble de la revendication 1.

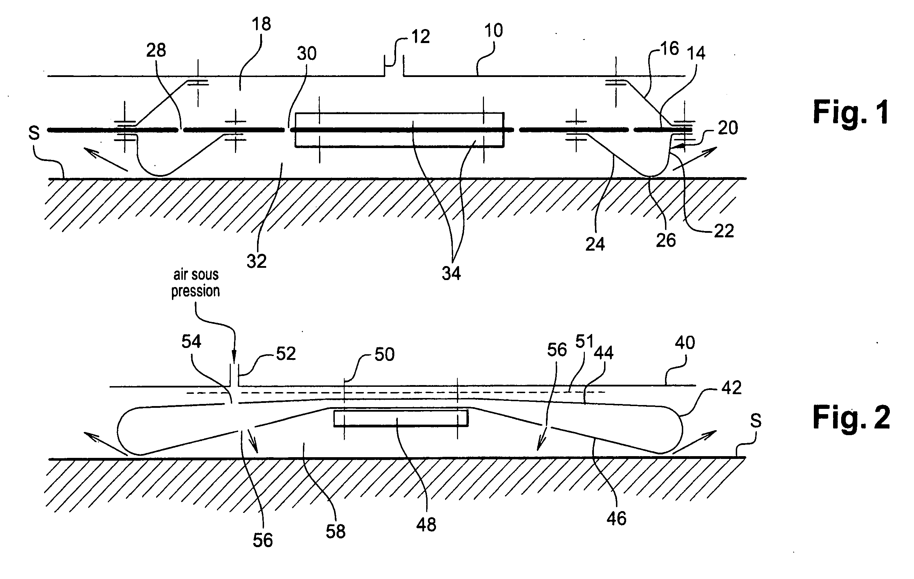

Il existe actuellement de nombreux dispositifs de ce type, qui diffèrent les uns des autres en général par leurs joints annulaires gonflables destinés à former le coussin d'air. Parmi les dispositifs connus, celui qui est représenté en figure 1 se distingue des dispositifs concurrents par sa stabilité dynamique et sa grande levée de la charge, ce dispositif comprenant un étage de suspension, formé par une jupe tronconique en élastomère montée entre une plaque supérieure de support de charge et une plaque inférieure, et un étage inférieur comprenant un joint annulaire gonflable fixé sous la plaque inférieure et alimenté en air sous pression depuis l'étage de suspension, qui alimente également l'espace de formation du coussin d'air délimité par la plaque inférieure, le joint annulaire gonflable et le sol.

Ce dispositif connu comporte un nombre relativement important de composants, ce qui complique son assemblage et augmente son coût.

On connaît par le document DE 34 40 933 A1 un dispositif de support et de transport de charges selon le préambule de la revendication 1, dans lequel une structure de support repose sur une pluralité d'enveloppes annulaires gonflables, dont chacune est formée de deux membranes comportant à leur périphérie des rebords épais fixés l'un sur l'autre par une jante intérieure et par un anneau extérieur de serrage.

La présente invention a essentiellement pour but de simplifier la structure et l'assemblage du dispositif connu de la figure 1 pour réduire son coût, tout en conservant ses qualités de stabilité dynamique et de grande levée de charge.

Elle propose à cet effet un dispositif de support et de transport de charges sur coussin d'air, comprenant une plaque de support de charge sous laquelle est fixée une enveloppe annulaire gonflable en matériau souple, et des moyens d'alimentation de l'enveloppe par un débit d'air sous pression, l'enveloppe gonflable étant formée de deux disques de matériau souple posés l'un sur l'autre et reliés de façon étanche l'un à l'autre à leur périphérie, le disque supérieur comportant au moins un orifice d'alimentation en air sous pression, le disque inférieur comportant des orifices d'alimentation du coussin d'air, caractérisé en ce que les deux disques sont serrés et fixés dans leur partie centrale sur la plaque support de charge par une plaque circulaire située sous le disque inférieur et fixée à la plaque support par des moyens tels que des vis ou analogues, et en ce que les deux disques sont fixés l'un à l'autre à leur périphérie par collage, par vulcanisation et/ou par couture, au moins un des disques comportant un rebord périphérique annulaire s'étendant vers le centre du disque du côté de l'autre disque, ce rebord périphérique étant fixé de façon étanche sur la face interne ou sur la face externe de l'autre disque.

Dans le dispositif selon l'invention, la plaque support de charge est portée par une seule enveloppe annulaire gonflable formée d'une toile continue qui correspond à la combinaison de la jupe tronconique de l'étage de suspension et du joint annulaire gonflable du dispositif précité de la technique antérieure, ce qui permet de conserver les qualités de stabilité dynamiques et de levée de ce dispositif connu, tout en réduisant significativement le nombre de composants et le coût de l'assemblage.

Avantageusement, une partie centrale du disque supérieur est fixée, par exemple collée, sur la plaque support de charge.

Dans un mode de réalisation préféré de l'invention, les deux disques ont la même forme et les mêmes dimensions, leur diamètre extérieur étant approximativement égal à celui de la plaque support de charge.

De préférence, chaque disque précité comporte un rebord périphérique annulaire du type précité, le rebord d'un premier des disques étant fixé de façon étanche sur la face interne du second disque et le rebord du second disque étant fixé de façon étanche sur la face externe du premier disque.

De façon encore préférée, le ou chaque rebord périphérique des disques précités est entaillé radialement et est formé de pattes radiales séparées les unes des autres et uniformément réparties à la périphérie des disques avec un pas déterminé, les pattes radiales d'un des disques étant angulairement décalées d'un demi pas par rapport aux pattes radiales de l'autre disque.

L'invention propose également un procédé de fabrication d'une enveloppe annulaire gonflable pour un dispositif du type décrit ci-dessus, ce procédé étant caractérisé en ce qu'il consiste à découper dans une toile caoutchoutée deux disques de même diamètre, à former par découpe des pattes radiales à la périphérie des disques avec un pas prédéterminé entre les pattes, à poser les disques l'un sur l'autre en les décalant angulairement d'un demi pas, à rabattre les pattes d'un premier disque entre les deux disques et les pattes du second disque sur le premier disque, et à fixer à étanchéité les pattes du premier disque sur le second disque et les pattes du second disque sur le premier disque.

De façon commode, pour cela, le procédé consiste à encoller les pattes et/ou les périphéries des disques avant de rabattre les pattes sur les disques et à leur appliquer éventuellement une pression pour assurer leur collage.

L'assemblage des disques peut être réalisé par vulcanisation à froid ou à chaud.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
La figure 1 est une vue schématique en coupe d'un dispositif de support et de transport de charge de la technique antérieure ;
La figure 2 est une vue schématique en coupe d'un dispositif de support et de transport de charge selon l'invention ;
La figure 3 est une vue schématique partielle d'un disque de toile caoutchoutée faisant partie du dispositif selon l'invention ;
La figure 4 est une vue schématique en coupe représentant l'assemblage de deux disques dans le procédé selon l'invention.

Le dispositif connu représenté en figure 1 comprend essentiellement une plaque métallique 10 de support de charge, comportant un embout 12 d'alimentation en air comprimé, et une plaque inférieure 14 reliées l'une à l'autre par une jupe tronconique 16 en élastomère, dont les extrémités sont fixées à étanchéité, par exemple par des vis, sur la plaque supérieure 10 et sur la plaque inférieure 14 autour de l'embout d'alimentation 12 de façon à définir un espace fermé 18 entre les deux plaques.

Un joint annulaire gonflable 20 en matériau souple est fixé sous la plaque inférieure 14, par exemple par des vis réparties le long de son bord périphérique intérieur et de son bord périphérique extérieur, ce joint comprenant à l'état gonflé une paroi cylindrique verticale 22 du côté extérieur et une paroi tronconique 24 du côté intérieur, ces deux parois étant raccordées l'une à l'autre par un arrondi 26 à la base du joint 20.

Des trous 28 sont formés dans la plaque inférieure 14 pour alimenter le joint 20 en air sous pression depuis l'étage de suspension formé par la jupe tronconique 16 entre les plaques 10 et 14. La dimension des trous 28 est suffisante pour que les pressions à l'intérieur de l'espace 18 et à l'intérieur du joint 20 soient sensiblement égales.

D'autres trous 30 sont formés dans la plaque inférieure 14 pour établir une communication entre l'espace 18 de l'étage de suspension et l'espace 32 délimité par la plaque 14, la paroi interne tronconique 24 du joint 20 et la surface S sur la laquelle est posé ce dispositif. Ces trous 30 ont une dimension déterminée pour créer une perte de charge au passage de l'air comprimé depuis l'espace 18 vers l'espace 32, de façon à ce que la pression dans l'espace 18 soit supérieure à la pression dans l'espace 32 et permette le gonflage de l'étage de suspension.

Des cales centrales 34 sont fixées sur la face supérieure et sur la face inférieure de la plaque 14, pour former respectivement un support de la plaque supérieure 10 et un appui au sol quand le dispositif n'est pas alimenté en air sous pression.

Ce dispositif fonctionne de la façon suivante :
quand de l'air sous pression est amené par l'embout 12 dans l'espace 18, cet air sous pression remplit l'espace 18 et l'espace interne du joint annulaire 20 pour réaliser une levée de la plaque inférieure 14 et de la plaque supérieure 10. L'air sous pression remplit également l'espace 32, à une pression inférieure à celle régnant dans l'espace 18 de l'étage de suspension, et s'échappe vers l'extérieur entre l'arrondi 26 du joint annulaire 20 et la surface S.

On constate que la levée de la charge posée sur la plaque supérieure 10 est importante, du fait du gonflage de l'étage de suspension formé entre les plaques 10 et 14 et du gonflage du joint annulaire 20. Par ailleurs, la stabilité en dynamique est excellente et on constate une absence quasi-totale de vibrations en déplacement, lors du transport d'une charge.

On peut régler la levée de la plaque inférieure 14 en modifiant le nombre de trous 30 qui alimentent l'espace inférieur 32, pour un diamètre donné de ces trous.

Le dispositif selon l'invention, représenté schématiquement en coupe en figure 2, comprend une plaque supérieure 40 de support de charge, sous laquelle est fixée une enveloppe annulaire gonflable 42 en matériau souple, qui correspond globalement à une combinaison de la jupe tronconique 16 et du joint annulaire 20 du dispositif connu de la figure 1.

Plus précisément, cette enveloppe annulaire gonflable 42 est formée de deux disques superposés 44 et 46 reliés de façon étanche à leur périphérie et qui sont appliqués et serrés dans leur partie centrale sur la plaque 40 de support de charge au moyen d'une plaque circulaire inférieure 48 fixée à la plaque de support 40 par exemple par des vis 50.

De préférence, pour une meilleure fixation, la majeure partie de la face supérieure du disque supérieur 44 est fixée, par exemple au moyen d'une couche d'adhésif 51, sur la face inférieure de la plaque 40 de support de charge.

L'enveloppe annulaire 42 est alimentée en air sous pression au moyen d'un embout 52 de la plaque support 40, débouchant dans l'enveloppe 42 par un orifice 54 du disque supérieur 44.

Quand l'enveloppe annulaire 42 est gonflée, elle prend la forme représentée en figure 2. Des orifices 56 de dimension calibrée sont formés dans le disque inférieur 46 pour remplir d'air sous pression l'espace interne 58 délimité par le disque inférieur 46 et la surface S sur laquelle est posé le dispositif selon l'invention, l'air s'échappant à l'extérieur par l'espace annulaire formé entre la périphérie du disque inférieur 46 et la surface S. Les orifices 56 sont donc formés dans le disque 46 entre la périphérie de la plaque 48 et la périphérie du disque 46.

La plaque inférieure 48 forme un appui au sol du dispositif à l'état dégonflé, sa hauteur étant déterminée à cet effet. Le diamètre de cette plaque 48 est compris par exemple entre 20 et 60% du diamètre extérieur des disques 44 et 46, de façon préférée entre 30 et 40% environ de ce diamètre extérieur.

Ce dispositif fonctionne de la façon suivante :
L'air sous pression est amené par l'embout 52 à l'intérieur de l'enveloppe 42 et gonfle celle-ci, qui prend la forme représentée en figure 2. L'air s'échappe de l'enveloppe 42 par les trous 56 et remplit d'air sous pression l'espace 58, le gonflage de l'enveloppe 42 et le remplissage d'air sous pression de l'espace 58 créant la levée de la plaque 40 de support de charge. La pression dans l'enveloppe 42 est supérieure à la pression dans l'espace interne 58 en raison de la perte de charge de l'air dans les trous 56.

La périphérie extérieure de l'enveloppe 42 est arrondie en arc de cercle et sa paroi supérieure s'étend en oblique de sa périphérie externe jusqu'à la plaque 40, de sorte que l'enveloppe annulaire 42 joue le rôle des étages de suspension et de levage du dispositif de la figure 1 et assure une bonne stabilité du dispositif selon l'invention en dynamique, grâce également aux orifices 56 qui alimentent le coussin d'air et qui contribuent à cette stabilité.

En faisant varier le nombre d'orifices 56, on peut modifier la levée de la plaque 40.

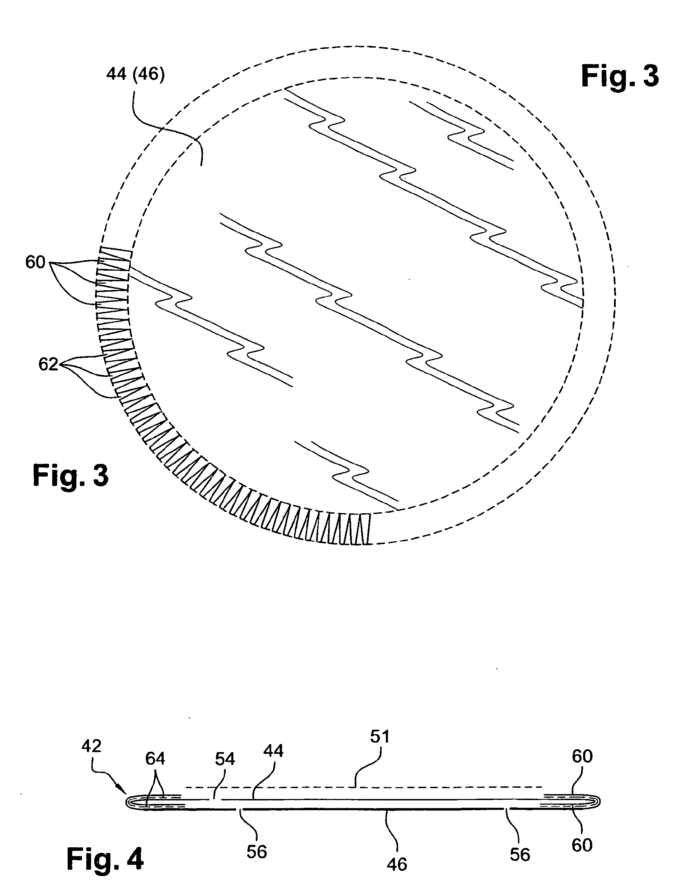

On va maintenant décrire un procédé de fabrication de l'enveloppe annulaire 42 en référence aux figures 3 et 4.

Les disques 44 et 46 formant cette enveloppe sont deux disques identiques de toile caoutchoutée, c'est-à-dire d'une toile enrobée d'un élastomère tel que du néoprène par exemple, cette toile étant non extensible.

On forme, par découpe, une série de pattes radiales 60 à la périphérie de chaque disque 44, 46, ces pattes 60 étant séparées les unes des autres par des encoches radiales 62 de forme par exemple triangulaire, et étant réparties de façon régulière à la périphérie du disque, avec un pas p entre les différentes pattes.

En pratique, les pattes radiales 60 peuvent avoir une longueur d'environ 1,5 à 2 cm, par exemple.

Un orifice 54 est ensuite formé dans le disque supérieur 44 et au moins deux trous calibrés 56 sont formés dans le disque inférieur 46.

Les deux disques 44, 46 sont ensuite posés l'un sur l'autre comme représenté en figure 4, les pattes 60 du disque supérieur 44 étant rabattues vers l'intérieur entre les deux disques et les pattes 60 du disque inférieur 46 étant rabattues vers l'intérieur au-dessus du disque supérieur 44.

Grâce à la forme triangulaire des encoches 62 entre les pattes, les pattes 60 sont sensiblement jointives lorsqu'elles sont rabattues vers l'intérieur.

Pour assurer une étanchéité parfaite, il est préférable que les deux disques 44 et 46 soient décalés angulairement l'un par rapport à l'autre autour de leur centre, d'un angle égal à la moitié du pas p entre les pattes 60.

La fixation des disques 44 et 46 à leur périphérie est assurée par un film d'adhésif 64 qui est déposé sur les pattes 60 avant leur rabattement et/ou sur les zones périphériques des surfaces supérieures des disques 44 et 46 sur lesquelles les pattes 60 vont être rabattues.

Une autre couche d'adhésif 51 est ensuite déposée sur la face supérieure du disque supérieur 44, pour fixation sur la face inférieure de la plaque 40 de support de charge.

Comme représenté en figure 4, la couche d'adhésif 51 peut s'étendre sensiblement sur toute la surface supérieure libre du disque 44 délimitée par les pattes rabattues 60 du disque 46.

Lorsque l'enveloppe annulaire 42 a été collée sur la face inférieure de la plaque 40, il suffit de poser la plaque circulaire 48 sur la partie centrale du disque inférieur 46 et de fixer cette plaque 48 à la plaque 40 au moyen de vis, boulons ou analogues.

Il serait bien entendu possible de former chaque disque 44, 46 avec un rebord périphérique continu s'étendant vers l'intérieur, mais le procédé de fabrication d'un tel disque serait plus compliqué et plus onéreux.

On pourrait également utiliser deux disques de toile caoutchoutée à périphérie circulaire continue et engager leurs bords périphériques dans une gouttière annulaire en toile caoutchoutée, qui serait ensuite fixée par collage sur les disques, mais la fabrication de cette gouttière se révélerait plus compliquée et plus coûteuse que les moyens décrits et représentés.

Dans une autre variante, on pourrait utiliser des anneaux de toile caoutchoutée à la place de disques pleins, ces anneaux ayant un orifice central d'un diamètre inférieur à celui de la plaque circulaire 48 pour être fixés sur la plaque support 40 par la plaque circulaire 48.

Dans d'autres variantes, les périphéries des disques 44 et 46 peuvent être fixées l'une à l'autre de façon étanche par un procédé de vulcanisation et/ou par couture.

## Revendications

1. Dispositif de support et de transport de charges sur coussin d'air, comprenant une plaque (40) de support de charge sous laquelle est fixée une enveloppe annulaire gonflable (42) en matériau souple et des moyens (52) d'alimentation de l'enveloppe par un débit d'air sous pression, l'enveloppe gonflable (42) étant formée de deux disques (44, 46) de matériau souple posés l'un sur l'autre et reliés de façon étanche à leur périphérie, le disque supérieur (44) comportant au moins un orifice (54) d'alimentation en air sous pression, le disque inférieur (46) comportant des orifices (56) d'alimentation du coussin d'air, **caractérisé en ce que** les deux disques sont serrés et fixés dans leur partie centrale sur la plaque support (40) par une plaque circulaire (48) située sous le disque inférieur (46) et fixée à la plaque support (40) par des moyens tels que des vis ou analogues, et **en ce que** les deux disques (44,46) sont fixés l'un à l'autre à leur périphérie par collage, par vulcanisation et/ou par couture, au moins un des disques comportant un rebord périphérique annulaire s'étendant vers le centre du disque du côté de l'autre disque, ce rebord périphérique étant fixé de façon étanche sur la face interne ou sur la face externe de l'autre disque.

2. Dispositif selon la revendication 1, **caractérisé en ce qu'**une partie centrale du disque supérieur (44) est fixée, par exemple collée, sur la plaque support (40).

3. Dispositif selon la revendication 1 ou 2, **caractérisé en ce que** les deux disques (44) et (46) ont la même forme et les mêmes dimensions.

4. Dispositif selon l'une des revendications précédentes, **caractérisé en ce que** les deux disques (44, 46) sont en toile caoutchoutée.

5. Dispositif selon l'une des revendications précédentes, **caractérisé en ce que** le diamètre de la plaque circulaire (48) fixant les disques (44, 46) sur la plaque support (40) est compris entre 20 et 60% du diamètre des disques, de préférence entre 30 et 40% du diamètre des disques.

6. Dispositif selon l'une des revendications précédentes, **caractérisé en ce que** les disques (44, 46) ont approximativement le même diamètre que la plaque support (40).

7. Dispositif selon l'une des revendications 1 à 6, **caractérisé en ce que** chaque disque comporte un rebord périphérique annulaire du type précité, le rebord d'un premier disque étant fixé de façon étanche sur la face interne du second disque et le rebord du second disque étant fixé sur la face externe du premier disque.

8. Dispositif selon la revendication 7, **caractérisé en ce que** le premier disque est le disque supérieur (44).

9. Dispositif selon l'une des revendications 1 à 8, **caractérisé en ce que** le ou chaque rebord périphérique est entaillé radialement et est formé de pattes radiales (60) séparées les unes des autres et uniformément réparties à la périphérie du disque avec un pas déterminé.

10. Dispositif selon la revendication 9, **caractérisé en ce que** les pattes radiales (60) d'un des disques sont angulairement décalées d'un demi pas par rapport au pattes radiales (60) de l'autre disque.

11. Procédé de fabrication d'une enveloppe annulaire gonflable pour un dispositif selon l'une des revendications précédentes, **caractérisé en ce qu'**il consiste à découper dans une toile caoutchoutée deux disques (44, 46) de même diamètre, à former par découpe des pattes radiales (60) à la périphérie des disques avec un pas déterminé entre les pattes, à poser les disques l'un sur l'autre en les décalant angulairement d'un demi pas, à rabattre les pattes d'un premier disque entre les deux disques et les pattes du second disque sur le premier disque, et à fixer à étanchéité les pattes de chaque disque sur l'autre disque.

12. Procédé selon la revendication 11, **caractérisé en ce qu'**il consiste à encoller les pattes (60) et/ou les faces supérieures des périphéries des disques (44, 46) avant de rabattre les pattes (60) sur les disques.

## Claims

1. A device for supporting and transporting loads on a cushion of air, the device comprising a load support plate (40) having an inflatable annular bag (42) of flexible material fastened thereunder and means (52) for feeding the bag with a flow of air under pressure, the inflatable bag (42) being made up of two disks (44, 46) of flexible material placed one on the other and connected together in leaktight manner at their peripheries, the top disk (44) including at least one feed orifice (54) for receiving air under pressure, the bottom disk (46) including orifices (56) for feeding the air cushion, the device being **characterized in that** the central portions of the two disks are fastened and clamped to the support plate (40) by a circular plate (48) situated under the bottom disk (46) and fastened to the support plate (40) by means such as screws or the like, and **in that** the two disks (44, 46) are fastened to each other at their peripheries by adhesive, by vulcanization, and/or by stitching, at least one of the disks including an annular peripheral rim extending towards the center of the disk beside the other disk, the peripheral rim being fastened in leaktight manner against the inside face or the outside face of the other disk.

2. A device according to claim 1, **characterized in that** a central portion of the top disk (44) is fastened, e.g. adhesively, to the support plate (40).

3. A device according to claim 1 or claim 2, **characterized in that** both disks (44, 46) have the same shape and the same dimensions.

4. A device according to any preceding claim, **characterized in that** both disks (44, 46) are made of rubberized fabric.

5. A device according to any preceding claim, **characterized in that** the diameter of the circular plate (48) fastening the disks (44, 46) to the support plate (40) lies in the range 20% to 60% of the diameter of the disks, and preferably in the range 30% to 40% of the diameter of the disks.

6. A device according to any preceding claim, **characterized in that** the disks (44, 46) are approximately of the same diameter as the support plate (40).

7. A device according to any one of claims 1 to 6, **characterized in that** each disk has an annular peripheral rim of the above-specified type, the rim of a first disk being fastened in leaktight manner against the inside face of the second disk, and the rim of the second disk being fastened against the outside face of the first disk.

8. A device according to claim 7, **characterized in that** the first disk is the top disk (44).

9. A device according to any one of claims 1 to 8, **characterized in that** the or each peripheral rim is notched radially and is in the form of radial tabs (60) that are separated from one another and that are uniformly distributed around the periphery of the disks with a determined pitch.

10. A device according to claim 9, **characterized in that** the radial tabs (60) of one of the disks are angularly offset by half of the pitch relative to the radial tabs (60) of the other disk.

11. A method of fabricating an inflatable annular bag for a device according to any preceding claim, the method being **characterized in that** it consists in cutting out two same-diameter disks (44, 46) from a rubberized fabric, in forming radial tabs (60) at the peripheries of the disks by cutting out the tabs at a determined pitch, in placing the disks one on the other and in offsetting them angularly by half of the pitch, in folding the tabs of a first disk between the two disks and the tabs of the second disk onto the first disk, and in fastening the tabs of each disk in leaktight manner against the other disk.

12. A method according to claim 11, **characterized in that** it consists in adhesively coating the tabs (60) and/or the top faces of the peripheries of the disks (44, 46) prior to folding down the tabs (60) on the disks.

## Patentansprüche

1. Vorrichtung zum Tragen und Transportieren von Lasten auf einem Luftkissen, enthaltend eine Tragplatte (40) zum Tragen der Last, unter welcher eine aufblasbare, ringförmige Hülle (42) aus nachgiebigem Material befestigt ist, sowie Versorgungsmittel (52) zum Versorgen der Hülle mit einer Druckluftmenge, wobei die aufblasbare Hülle (42) aus zwei Scheiben (44, 46) aus nachgiebigem Material gebildet ist, die aufeinander gelegt und an ihrem Umfang in dichter Weise verbunden sind, wobei die obere Scheibe (44) zumindest eine Öffnung (54) zur Versorgung mit Druckluft aufweist und die untere Scheibe (46) Öffnungen (56) zur Versorgung des Luftkissens aufweist, **dadurch gekennzeichnet, dass** die beiden Scheiben in ihrem Mittelbereich über eine kreisförmige Platte (48) zusammengedrückt und an die Tragplatte (40) befestigt sind, die sich unter der unteren Scheibe (46) befindet und über Mittel, wie etwa Schrauben oder dergleichen, an die Tragplatte (40) befestigt ist, und dass die beiden Scheiben (44, 46) an ihrem Umfang durch Verkleben, Vulkanisieren und/oder Vernähen aneinander befestigt sind, wobei zumindest die eine Scheibe eine ringförmige Umfangsrandkante aufweist, die sich auf der Seite der anderen Scheibe bis zur Mitte der Scheibe erstreckt, wobei diese Umfangsrandkante in dichter Weise an die Innenseite oder an die Außenseite der anderen Scheibe befestigt ist.

2. Vorrichtung nach Anspruch 1, **dadurch gekennzeichnet, dass** ein Mittelbereich der oberen Scheibe (44) au die Tragplatte (40) befestigt, beispielsweise angeklebt, ist.

3. Vorrichtung nach Anspruch 1 oder 2, **dadurch gekennzeichnet, dass** die beiden Scheiben (44) und (46) die gleiche Form und gleiche Abmessungen haben.

4. Vorrichtung nach einem der vorangehenden Ansprüche, **dadurch gekennzeichnet, dass** die beiden Scheiben (44, 46) aus gummiertem Tuch bestehen.

5. Vorrichtung nach einem der vorangehenden Ansprüche, **dadurch gekennzeichnet, dass** der Durchmesser der kreisförmigen Platte (48), mit welcher die beiden Scheiben (44, 46) an die Tragplatte befestigt werden, zwischen 20 und 60 % des Durchmessers der Scheiben, vorzugsweise zwischen 30 und 40 % des Durchmessers der Scheiben, beträgt.

6. Vorrichtung nach einem der vorangehenden Ansprüche, **dadurch gekennzeichnet, dass** die Scheiben (44, 46) annähernd den gleichen Durchmesser wie die Tragplatte (40) haben.

7. Vorrichtung nach einem der Ansprüche 1 bis 6, **dadurch gekennzeichnet, dass** jede Scheibe eine ringförmige Umfangsrandkante vorangehend genannter Art aufweist, wobei die Randkante einer ersten Scheibe in dichter Weise an die Innenseite der zweiten Scheibe und die Randkante der zweiten Scheibe an die Außenseite der ersten Scheibe befestigt ist.

8. Vorrichtung nach Anspruch 7, **dadurch gekennzeichnet, dass** die erste Scheibe die obere Scheibe (44) ist.

9. Vorrichtung nach einem der Ansprüche 1 bis 8, **dadurch gekennzeichnet, dass** die bzw. jede Umfangsrandkante radial eingekerbt und aus radial verlaufenden Laschen (60) gebildet ist, die voneinander getrennt sind und mit einer bestimmten Teilung gleichmäßig über den Umfang der Scheibe verteilt angeordnet sind.

10. Vorrichtung nach Anspruch 9, **dadurch gekennzeichnet, dass** die radial verlaufenden Laschen (60) der einen Scheibe um eine halbe Teilung bezüglich der radial verlaufenden Laschen (60) der anderen Scheibe im Winkel versetzt sind.

11. Verfahren zum Herstellen einer aufblasbaren, ringförmigen Hülle für eine Vorrichtung nach einem der vorangehenden Ansprüche, **dadurch gekennzeichnet, dass** es darin besteht, aus einem gummierten Tuch zwei Scheiben (44, 46) gleichen Durchmessers auszuschneiden, am Umfang der Scheiben radial verlaufende Laschen (60) mit bestimmter Teilung durch Zuschneiden zwischen den Laschen auszubilden, die Scheiben aufeinanderzulegen und sie dabei um eine halbe Teilung im Winkel zu versetzen, die Laschen einer ersten Scheibe zwischen die beiden Scheiben umzuschlagen und die Laschen der zweiten Scheibe auf die erste Scheibe umzuschlagen, und die Laschen einer jeden Scheibe in dichter Weise an die andere Scheibe zu befestigen.

12. Verfahren nach Anspruch 11, **dadurch gekennzeichnet, dass** es darin besteht, die Laschen (60) und/oder die oberen Flächen der Umfangsbereiche der Scheiben (44, 46) zu beleimen, bevor die Laschen (60) auf die Scheiben umgeschlagen werden.
